# EUROPEAN PATENT APPLICATION

(11) **EP 0 747 677 A2**
(43) Date of publication of application: **11.12.1996**
(21) Application number: 96108440.7
(22) Date of filing: 28.05.1996
(51) Int. Cl.: G01F 23/32

(54) **Integrated gauge, particularly for measuring and displaying functional parameters in electric power transformers**

(30) Priority: 07.06.1995 IT PD950047 U
(71) Applicant: COMEM S.p.A., 36054 Montebello Vicentio (Vicenza) (IT)
(72) Inventor: Dal Lago, Silvio, 36100 Vicenza (IT)
(74) Representative: Modiano, Guido, Dr.-Ing.

(57) **Abstract**

An integrated gauge, particularly for measuring and displaying functional parameters in electric power transformers, including a box-like body (11) that can be anchored to the structure of the transformer and inside which a partition (12) divides the internal volume into two regions. A first region forms, in association with a first removable cover (13), a first chamber (14) inside which devices (26,27,28) for measuring and adjusting the safety parameters of the electric power transformer are accommodated. A second region instead forms, in association with a second partially transparent cover (15), a second hermetic chamber (16) inside which a floater (17) is movably accommodated, the floater (17) being visible from outside to the operator and being adapted to measure the level of the cooling oil fed into the second chamber (16) by a filling element (18). The second cover (15) is fixed to the body (11) by ultrasound/friction welding or by a sealant deposited in a channel formed at the edge region of the second cover (15).

## Description

The present invention relates to an integrated gauge, particularly but not exclusively useful for measuring and displaying functional parameters in electric power transformers.

It is known that electric power transformers produce heat substantially because of the Joule effect during operation.

The problem of heat generation is particularly important and dangerous in the case of transformers used to reduce the voltage of power supply mains.

In order to control heat generation, electric power transformers are provided with cooling systems which are substantially constituted by chambers inside which oil circulates, said oil having the purpose of acting as a heat transferring fluid for dissipation.

To allow the cooling oil to effectively perform its task without danger, said oil must be monitored constantly as regards several parameters, such as for example temperature, gas production, volume, pressure, and others.

Once the optimum parameters at which the cooling oil must be kept for a given specific electric power transformer have been established during design and testing, it is necessary to provide a set of devices adapted to measure the operating parameters, report any abnormalities, and/or automatically disengage or disconnect said transformer.

Integrated gauges have long been used for this purpose; their function is indeed to control and display the functional parameters of the electric power transformer.

A principal aim of the present invention is to provide an integrated gauge that is functionally reliable in the operating configuration despite having a structure that can be easily produced and assembled.

Accordingly, an object of the present invention is to provide a gauge adapted to measure, in a complete manner, the functional parameters of electric power transformers, integrating said parameters so as to provide an optimum operating condition.

Another object of the present invention is to provide a gauge that can be produced with conventional technologies and the overall cost whereof is competitive with respect to conventional gauges.

Another object of the present invention is to provide a gauge that is easy to read for the operator both during installation and during operation and requires no maintenance during use.

Another object of the present invention is to provide a gauge the structure whereof can be easily adapted to the various transformers on which it can be used.

This aim, these objects, and others which will become apparent hereinafter are achieved by an integrated gauge, particularly for measuring and displaying functional parameters in electric power transformers, which comprises a box-like body that can be anchored to the structure of the transformer and inside which a partition divides the internal volume into two regions, a first region forming, in association with a first removable cover, a first chamber inside which devices for measuring and adjusting the safety parameters of the electric power transformer are accommodated, and a second region forming, in association with a second partially transparent cover, a second hermetic chamber inside which a floater is movably accommodated, said floater being visible from outside to the operator and being adapted to measure the level of the cooling oil fed into said chamber by a filling element, said integrated gauge being characterized in that said second cover is fixed to said body by ultrasound/friction welding or by means of sealant deposited in a channel formed at the edge region of said second cover.

Further characteristics and advantages of the present invention will become apparent from the following detailed description of an embodiment thereof, illustrated only by way of non-limitative example in the accompanying drawings, wherein:
figure 1 is a front orthographic projection view of an integrated gauge according to the invention;
figure 2 is a sectional side view of the gauge of figure 1;
figure 3 is a front view of the integrated gauge, showing the devices accommodated therein;
figure 4 is a block diagram of the integrated gauge of figure 1;
figure 5 is an axonometric view of a detail of the integrated gauge according to the invention.

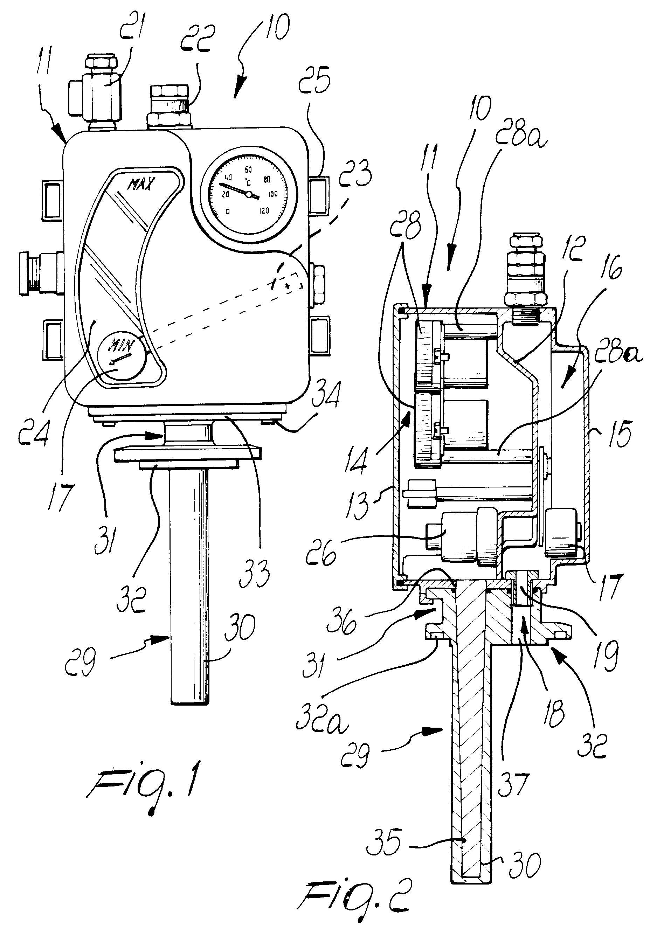

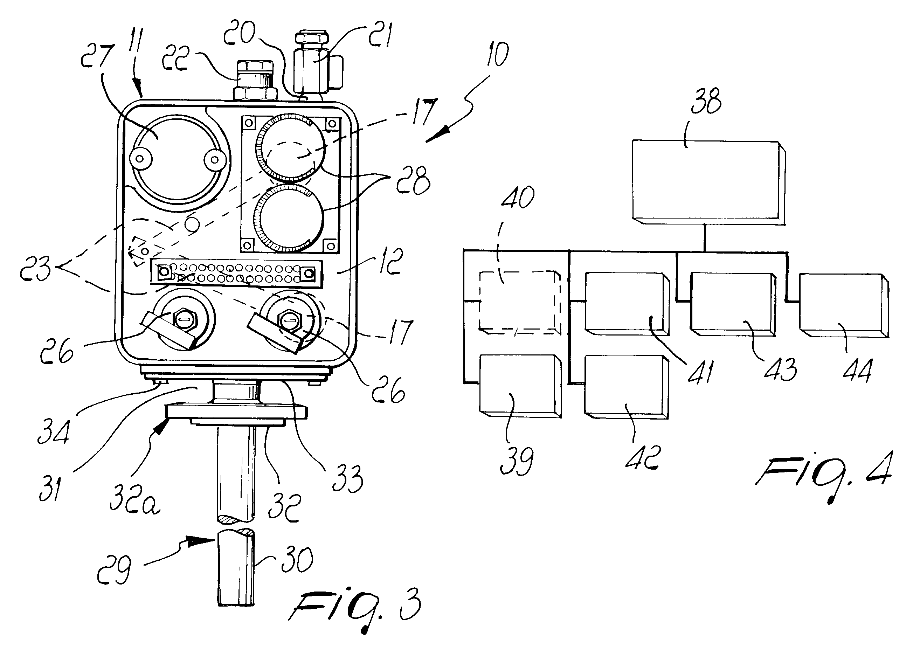

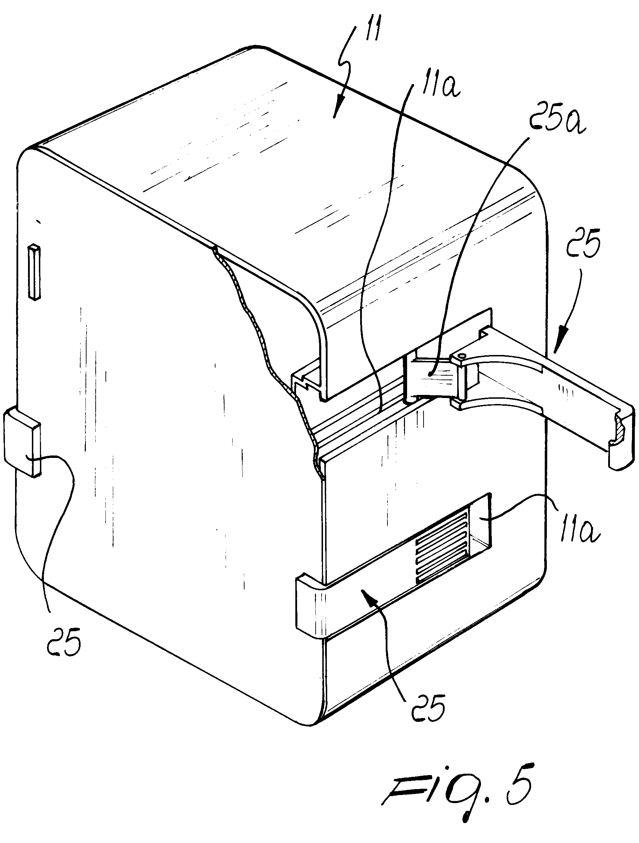

With particular reference to figures 1 to 5, an integrated gauge particularly for measuring and displaying functional parameters in electric power transformers, according to the invention, is generally designated by the reference numeral 10.

The integrated gauge 10 comprises a box-like body 11, which can be anchored to the structure of the transformer, not shown in the figures, and inside which a shaped partition 12 divides the internal volume into two regions.

A first region forms, in association with a first removable cover 13, a first chamber 14, inside which measurement and adjustment devices, described hereinafter, for the safety parameters of the electric power transformer are accommodated.

A second region forms, in association with a second cover 15, a second hermetic chamber 16 inside which a floater 17 is movably accommodated; said floater is internally provided with a magnet, is externally visible to the operator because the second cover 15 is partially transparent, and is adapted to measure the level of the cooling oil fed into the second chamber 16 through a filling element generally designated by the reference numeral 18 and constituted by an opening 19.

The second chamber 16 furthermore has an upper opening 20 with which a cock 21 is associated; the gas produced by the transformer, in case of short circuit, is drawn for analysis from said cock.

The critical gas production level is measured by the floater 17, which trips a magnetic and anti-seismic laminar contact, not shown in the figures, which is in turn adapted to close or open electric safety circuits, for alarm or disconnection, of said transformer.

More specifically, the gas that is produced, by rising through the oil, enters the second chamber 16, forming a pocket that pushes the floater 17 downwards; said floater, once it has reached a preset position that corresponds to a preset amount of gas (preferably equal to 170 cm³), by means of the magnet included therein, closes or opens the laminar magnetic contact.

The second chamber 16 furthermore has an opening that is closed by a plug 22 through which the oil is replenished.

Since the body 11 is made of plastics in this case, the plug 22 is monolithic with said body.

The plug 22 and the cock 21 are provided with a device that allows to easily install a seal to avoid incorrect operations and/or tampering with the transformer.

The second cover 15 is stably fixed to the corresponding edge of the body 11 by ultrasound/friction welding, but in other cases it may be fixed by means of sealant deposited in a channel that is formed at the edge region of said second cover 15.

The floater 17 is furthermore coupled to the end of a rod 23, the other end whereof is rotatably coupled to the partition 12 and can thus oscillate over preset angles with respect to the horizontal axis.

The floater 17 is visible to the operator through a window 24 that is shaped, in this case, like the path of its movement and is formed monolithically in high relief in the second cover 15.

As regards the first chamber 14, the first cover 13 is associated therewith, in this case, by means of four quick-coupling hooks 25 made of plastics; each hook comprises an articulated anchoring element 25a that slides within a respective seat 11a formed in the body 11 and inside which, in the closed configuration, said respective hook 25 retracts.

Furthermore, as mentioned, the first chamber 14 accommodates devices for measuring and adjusting the safety parameters of the electric power transformer, which in this case are constituted by one or two pressure switches 26 of a per se known type, which are connected so as to close or open an electric or electronic circuit, not shown in the figures, for the control of the safety parameters linked to the generation of pressure in said transformer.

The measurement and adjustment devices furthermore comprise: a thermometer 27, which is provided with a so-called max pointer and is adapted to detect and display the temperature of the oil; one or two thermostats 28, which are adapted to close or open a respective electric or electronic circuit, not shown in the figures, and control safety parameters of said electric power transformer.

The thermostats 28 are fixed to the partition 12 by means of per se known quick anchoring elements 28a.

The probes, not shown in the figures, of the measurement and adjustment devices described above are accommodated in a trap 29 which in this case also acts as anchor and base for the gauge 10.

The trap 29 has a rod-like shape and has an end 30 which enters, in the operating configuration, the frame of the transformer, whereas the other end 31 is shaped so as to form flanges, respectively 32, 32a, and 33.

The flange 32a rests on the outer frame of the transformer, the flange 32 acts as a centering element for the device 10, entering the hole of the transformer, and the flange 33 is fixed by supporting it, by means of threaded elements 34, on the integrated gauge 10.

The trap 29 is internally hollow and filled with a heat-conducting mix 35 in which the probes are immersed; said probes enter the first chamber 14 through an opening 36 formed in the body 11.

A duct 37 is furthermore formed in the end 31 and completes the filling element 18 by connecting, at one of its openings, to the opening 19, whereas the other opening is located inside the transformer.

With particular reference to figure 4, said figure shows a block diagram of the gauge 10.

In this block diagram, the gauge 10 is generally represented by the block 38.

The integrated gauge 10 combines the possibilities of measuring and controlling a plurality of safety parameters of the electric power transformer.

In particular, the block 39 summarizes the device for measuring the internal pressure of the transformer which, as shown, is constituted, in this embodiment, by one or two pressure switches 26.

A block 40, shown in dashed lines, schematically represents the possibility of inserting a pressure gauge for measuring and displaying the internal pressure; said pressure gauge can also be omitted in the simpler embodiments.

The blocks 41 and 42 represent respectively the devices for measuring the temperature of the oil, which as shown are constituted by a thermometer 27, and the devices for controlling the circuits that are adapted to measure the temperature parameter, which are constituted, in the described embodiment, by one or two thermostats 28.

A block 43 schematically represents the presence of a device for measuring the level of the oil, with minimum-level contacts, which as shown is constituted by a floater 17 and by a laminar magnetic contact (not shown in the figures).

Finally, a block 44 schematically represents an indicator for the presence of gas produced by the transformer; said indicator is constituted by the hermetic chamber 16 and by the floater 17 as described, which are adapted to close or open a circuit for controlling the safety parameters determined by the amount of gas that is produced.

In practice it has been observed that the present invention has achieved the intended aim and objects.

In particular, it should be noted that the integrated gauge according to the invention is constructively simple but has all the devices adapted to effectively and analytically measure the operating parameters of the electric power transformer.

It should also be noted that the problem of the hermetic connection of the second cover 15 has been solved excellently, so as to provide a chamber into which the floater and the gas produced by the oil can conveniently be introduced to measure the amount of gas produced and the level of said oil.

The present invention, by being productively simple to manufacture, furthermore leads to costs that are competitive with respect to conventional gauges.

The present invention is susceptible of numerous modifications and variations, all of which are within the scope of the inventive concept.

All the details may be replaced with other technically equivalent elements.

The materials and the dimensions may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An integrated gauge, particularly for measuring and displaying functional parameters in electric power transformers, comprising a box-like body that can be anchored to the structure of the transformer and inside which a partition divides the internal volume into two regions, a first region forming, in association with a first removable cover, a first chamber inside which devices for measuring and adjusting the safety parameters of the electric power transformer are accommodated, and a second region forming, in association with a second partially transparent cover, a second hermetic chamber inside which a floater is movably accommodated, said floater being visible from outside to the operator and being adapted to measure the level of the cooling oil fed into said chamber by a filling element, said integrated gauge being characterized in that said second cover is fixed to said body by ultrasound/friction welding or by means of sealant deposited in a channel formed at the edge region of said second cover.

2. An integrated gauge according to claim 1, characterized in that said floater is rigidly coupled to the end of a rod the other end whereof is rotatably coupled to said body so as to oscillate over preset angles with respect to a horizontal axis, said floater being visible to the operator through a transparent region of said second cover.

3. An integrated gauge according to claim 2, characterized in that said rod is rotatably coupled to said partition.

4. An integrated gauge according to claim 1, characterized in that it comprises a device for measuring the presence of gas, said device being constituted by said floater which, by including a magnet, when it is in a preset position due to the production of gas, trips a magnetic contact connected to electromechanical or electronic and mechanical transducers and to devices for controlling the safety parameters of the transformer.

5. An intergrated gauge according to claim 1, characterized in that said first cover is detachably associated with said body by means of one or more quick-coupling hooks made of metallic or plastic material, each hook comprising an articulated anchoring element that slides in a corresponding seat formed in said body and into which the corresponding hook retracts in the closed configuration.

6. An integrated gauge according to claim 1, characterized in that it comprises pressure measurement devices constituted by two pressure switches that are connected, so as to close or open it, to an electronic or electric circuit for controlling the functional parameters linked to the generation of pressure in said electric transformer.

7. An integrated gauge according to one or more of the preceding claims, characterized in that said devices for measuring and adjusting the safety parameters of the electric power transformer comprise temperature measurement means.

8. An integrated gauge according to claim 7, characterized in that said temperature measurement means comprise at least one thermometer adapted to measure the temperature of the oil.

9. An integrated gauge according to claim 7, characterized in that it comprises at least one thermostat adapted to close a respective electric or electronic circuit for controlling the safety parameters of the transformer, said at least one thermostat being fixed to the internal surface of said body by means of quick-anchoring elements.

10. An integrated gauge according to claim 1, characterized in that it comprises a replenishment plug connected to said second chamber and obtained monolithically from said body, said body being made of plastics.
